# EUROPEAN PATENT APPLICATION

(11) **EP 4 063 146 A1**
(43) Date of publication of application: **28.09.2022**
(21) Application number: 20899156.2
(22) Date of filing: 10.12.2020
(51) Int. Cl.: B60C 11/01, B60C 11/03, B60C 11/13

(54) **TIRE**

(30) Priority: 10.12.2019 JP 2019223072
(71) Applicant: Sumitomo Rubber Industries, Ltd., Kobe-shi, Hyogo 651-0072 (JP)
(72) Inventor: NAKAJIMA Koichi, Kobe-shi, Hyogo 651-0072 (JP)
(74) Representative: Manitz Finsterwald Patent- und Rechtsanwaltspartnerschaft mbB
(86) International application number: PCT/JP2020/046040
(87) International publication number: WO 2021/117807

(57) **Abstract**

A tire 1 in which shoulder land portions 7 are included in a tread portion 2. Provided in the shoulder land portions 7 are a plurality of first shoulder lateral grooves 10 that extend inward in the tire axial direction from tread edges Te and terminate within the shoulder land portions 7. The first shoulder lateral grooves 10 include first groove portions 11 that extend in the tire axial direction from the tread edges Te, second groove portions 12 that extend farther inward in the tire axial direction than the first groove portions 11 and moreover extend at different positions in the tire circumferential direction than the first groove portions 11, and third groove portions 13 connecting the first groove portions 11 and the second groove portions 12.

## Description

### Technical Field

The present invention relates to a tire capable of achieving both noise performance and uneven wear resistance performance.

### Background Art

Conventionally, tires that include a tread portion with a ground contact surface formed between the tread edges are known. For example, Patent Document 1 below has proposed a tire which exhibits excellent steering stability and wet performance by the inner shoulder lug grooves provided on the inner shoulder land portion and the outer shoulder lateral grooves provided on the outer shoulder land portions in the tread portion.

### Citation List

### Patent Literature

Patent Literature 1 Japanese Unexamined Patent Application Publication 2018-079741

### Summary of Invention

### Technical Problem

However, the inner shoulder lug grooves and the outer shoulder lateral grooves of Patent Document 1 extend in the tire axial direction, and the impact sound when the tire is grounded and the air pumping noise when the tire is released from the ground tend to loud. Thus, there was room for improvement in noise performance. In addition, the shoulder lateral grooves of Patent Document 1 extend at an angle with respect to the tire axial direction, and acute-angled portions which are formed between the shoulder lateral grooves and the outer shoulder circumferential main groove may cause uneven wear.

The present invention has been made in view of the above circumstances and has a major object to provide a tire capable of achieving both noise performance and uneven wear resistance performance.

### Solution to Problem

The present invention relates to a tire comprising a tread portion with a ground contact surface formed between tread edges, wherein the tread portion is provided with a plurality of circumferential grooves extending continuously in a tire circumferential direction and land portions demarcated by the circumferential grooves, the circumferential grooves comprise shoulder circumferential grooves arranged nearest to the respective tread edges, the land portions comprise shoulder land portions demarcated between the shoulder circumferential grooves and the tread edges, the shoulder land portions are provided with a plurality of first shoulder lateral grooves extending inwardly in a tire axial direction from the tread edges and terminating within the shoulder land portions, and the first shoulder lateral grooves comprise first groove portions extending in the tire axial direction from the tread edges, second groove portions extending in the tire axial direction at locations that are inward in the tire axial direction than the first groove portions and are different from the first groove portions with respect to the tire circumferential direction, and third groove portions connecting the first groove portions and the second groove portions.

The tire according to the present invention is preferable that the first groove portions, the second groove portions and the third groove portions are formed linearly.

The tire according to the present invention is preferable that the first groove portions and the second groove portions are parallel with each other, and the third groove portions are inclined at an angle of from 100 to 140 degrees with respect to the first groove portions and the second groove portions.

The tire according to the present invention is preferable that the shoulder land portions are provided with a plurality of second shoulder lateral grooves extending outwardly in the tire axial direction from the shoulder circumferential grooves and terminating within the shoulder land portions, and the first shoulder lateral grooves and the second shoulder lateral grooves are arranged alternately in the tire circumferential direction.

The tire according to the present invention is preferable that the shoulder land portions are provided with shallow grooves crossing the first shoulder lateral grooves.

The tire according to the present invention is preferable that the shallow grooves have a groove depth not more than 1 mm.

The tire according to the present invention is preferable that the shallow grooves are formed in a curved shape.

The tire according to the present invention is preferable that the shoulder land portions comprise a first shoulder land portion provided on one side in the tire axial direction and a second shoulder land portion provided on the other side in the tire axial direction, and the third groove portions provided on the second shoulder land portion are inclined in a same direction as the third groove portions provided on the first shoulder land portion with respect to the tire circumferential direction.

The tire according to the present invention is preferable that the shoulder land portions comprise a first shoulder land portion provided on one side in the tire axial direction and a second shoulder land portion provided on the other side in the tire axial direction, and the third groove portions provided on the second shoulder land portion are inclined in a different direction to the third groove portions provided on the first shoulder land portion with respect to the tire circumferential direction.

The tire according to the present invention is preferable that the third groove portions are inclined at an angle of from 20 to 40 degrees with respect to the tire circumferential direction, and the third groove portions have a length in the tire circumferential direction of from 70% to 90% of a pitch in the tire circumferential direction of the first shoulder lateral grooves.

The tire according to the present invention is preferable that a length in the tire axial direction of the first groove portions is of from 20% to 30% of a width in the tire axial direction of the shoulder land portions, and a length in the tire axial direction of the second groove portions is of from 90% to 110% of the length in the tire axial direction of the first groove portions.

The tire according to the present invention is preferable that a distance in the tire axial direction between inner ends in the tire axial direction of the first shoulder lateral grooves and the shoulder circumferential groove adjacent the inner ends is of from 2% to 7% of a width in the tire axial direction of the concerned shoulder land portion.

The tire according to the present invention is preferable that the first groove portions and the second groove portions have an angle not less than 80 degrees with respect to the tire circumferential direction.

The tire according to the present invention is preferable that the shoulder land portions comprise a first shoulder land portion provided on one side in the tire axial direction and a second shoulder land portion provided on the other side in the tire axial direction, and the first groove portions and the second groove portions provided on the first shoulder land portion are staggered in the tire circumferential direction with respect to the first groove portions and the second groove portion provided on the second shoulder land portion.

The tire according to the present invention is preferable that a groove width of the first shoulder lateral grooves is of from 2% to 12% of a width in the tire axial direction of the shoulder land portions, and is constant in a length direction thereof.

### Effects of Invention

In the present invention, the shoulder land portions are provided with a plurality of first shoulder lateral grooves extending inwardly in the tire axial direction from the tread edges and terminating within the shoulder land portions. As a result, land regions between the shoulder circumferential grooves and the first shoulder lateral grooves are ensured, and acute-angled portions are not formed between the shoulder circumferential grooves and the first shoulder lateral grooves. Thus, uneven wear resistance performance is improved. In addition, the noise performance is improved because the air column resonance sound flowing in the shoulder circumferential grooves does not pass through the first shoulder lateral grooves.

In the tire according to the present invention, the first shoulder lateral grooves comprises first groove portions extending in the tire axial direction from the tread edges, second groove portions extending in the tire axial direction at locations that are inward in the tire axial direction than the first groove portions and are different from the first groove portions with respect to the tire circumferential direction, and third groove portions connecting the first groove portions and the second groove portions.

In such first shoulder lateral grooves, since the first groove portions and the second groove portions are located at different positions in the tire circumferential direction, the reaction force at the time of grounding is dispersed and the timing is shifted, thereby reducing the impact sound. In addition, in the first shoulder lateral grooves, the third groove portions have an angle different from the first groove portions and the second groove portions, which can compress the air step by step and the air pumping sound can be reduced. Since the third groove portions can disperse the sliding points at the time of separating from the ground, uneven wear resistance performance can also be improved. Thus, the tire according to the present invention can achieving both noise performance and uneven wear resistance performance at a high level.

### Brief Description of Drawings

FIG. 1 is a development view of a tread portion showing an embodiment of a tire in accordance with the present invention.
FIG. 2 is an enlarged view of a shoulder land portion of FIG. 1.
FIG. 3 is a development view of the shoulder land portion in accordance with another embodiment.
FIG. 4 is a development view of the tread portion in accordance with another embodiment.
FIG. 5 is a development view of the tread portion in accordance with yet another embodiment.

### Description of Embodiments

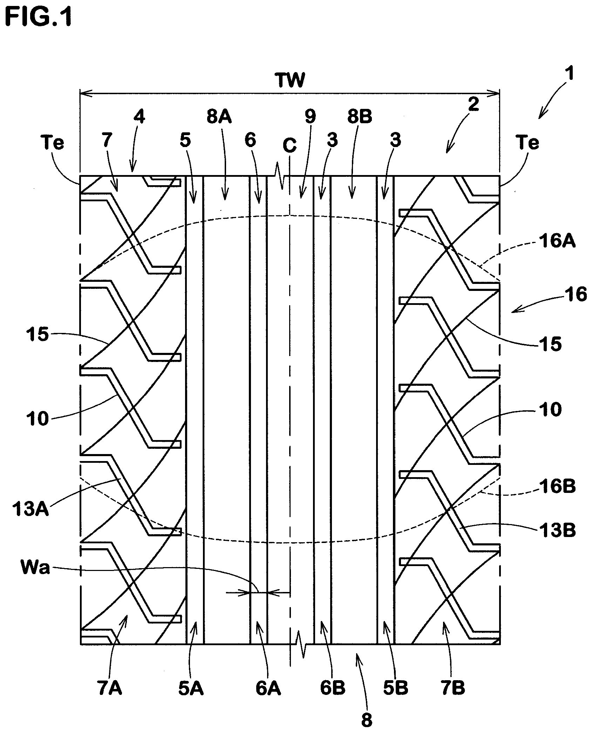

Hereinafter, an embodiment of the present invention will be described based on the drawings. FIG. 1 is a development view of a tread portion 2 of a tire 1 in accordance with the present embodiment. In FIG. 1, as a preferred embodiment, the tread portion 2 of a pneumatic tire 1 for passenger car is shown. However, the present invention can be applied to, for example, a pneumatic tire 1 for heavy loads and the tire 1 of another category.

As shown in FIG. 1, the tread portion 2 according to the present embodiment is provided with a plurality of circumferential grooves 3 extending continuously in the tire circumferential direction and land portions 4 demarcated by the circumferential grooves 3.

The circumferential grooves 3 according to the present embodiment include shoulder circumferential grooves 5 arranged nearest to respective tread edges Te. The land portions 4 according to the present embodiment include shoulder land portions 7 demarcated between the shoulder circumferential grooves 5 and the tread edges Te.

The "tread edges" Te is defined as the most outer grounding positions in the tire axial direction when the tire being in the normal state is grounded on a flat surface with a normal load at zero camber angles, wherein the normal state is such that the tire 1 is mounted onto a normal rim (not illustrated) with a normal internal pressure but with no load. In the normal state, the distance in the tire axial direction between the tread edges Te and Te is defined as the tread width TW. Unless otherwise noted, the dimensions of portions of the tire 1 are the values measured in the normal state.

The "normal rim" is a rim defined for each tire in the standard system including on which the tire 1 is based, wherein the normal rim is the "standard rim" in JATMA, the "Design Rim" in TRA, and the "Measuring Rim" in ETRTO, for example.

The "normal internal pressure" is the air pressure defined for each tire in the standard system on which the tire 1 is based, wherein the normal internal pressure is the "maximum air pressure" in JATMA, the maximum pressure given in the "Tire Load Limits at Various Cold Inflation Pressures" table in TRA, and the "Inflation Pressure" in ETRTO, for example. When the tire 1 is for a passenger car, the normal internal pressure is 180 kPa.

The "normal load" is the load defined for each tire in the standard system on which the tire 1 is based, wherein the normal load is the "maximum load capacity" in JATMA, the maximum value given in the above-mentioned table in TRA, and the "Load Capacity" in ETRTO, for example. When the tire 1 is for a passenger car, the normal load is a load equivalent to 88% of the above load.

FIG. 1 shows one edge 16A (upper side in Figure) and the other edge 16B (lower side in Figure) in the tire circumferential direction of the ground contact shape 16 when the tire 1 in the normal state is loaded with the normal load.

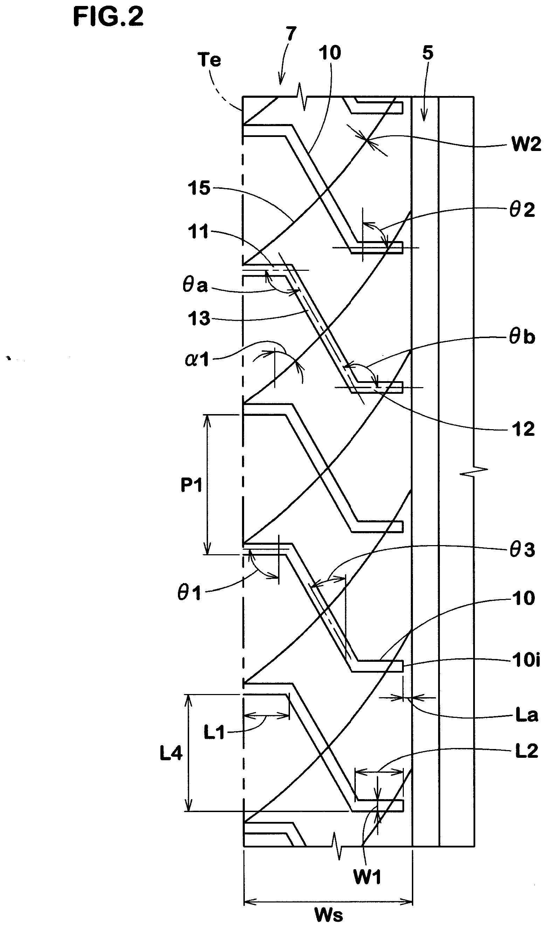

FIG. 2 is an enlarged view of one of the shoulder land portions of FIG. 1. As shown in FIG. 2, each shoulder land portion 7 according to the present embodiment is provided with a plurality of first shoulder lateral grooves 10 extending inwardly in the tire axial direction from the tread edge Te and terminating within the shoulder land portion 7. As a result, land regions between the shoulder circumferential grooves 5 and the first shoulder lateral grooves 10 are ensured, and acute-angled portions are not formed between the shoulder circumferential grooves 5 and the first shoulder lateral grooves 10. Thus, uneven wear resistance performance is improved. In addition, the noise performance is improved because the air column resonance sound flowing in the circumferential grooves 3 does not pass through the first shoulder lateral grooves 10.

The first shoulder lateral grooves 10 include first groove portions 11, second groove portions 12, and third groove portions 13. The first groove portions 11 according to the present embodiment extend in the tire axial direction from the tread edge Te. The second groove portions 12 according to the present embodiment extend in the tire axial direction at locations that are inward in the tire axial direction than the first groove portions 11 and are different from the first groove portions 11 with respect to the tire circumferential direction. The third groove portions 13 according to the present embodiment connect the first groove portions 11 and the second groove portions 12. In such first shoulder lateral grooves 10, since the first groove portions 11 and the second groove portions 12 are located at different positions in the tire circumferential direction, the reaction force at the time of grounding is dispersed and the timing is shifted, thereby reducing the impact sound. Since the third groove portions 13 can disperse the sliding points at the time of separating from the ground, uneven wear resistance performance can also be improved. Thus, the tire 1 according to the present invention can achieve both noise performance and uneven wear resistance performance at a high level.

The first groove portions 11 according to the present embodiment each include a linearly extending portion. The second groove portions 12 according to the present embodiment each include a linearly extending portion. The third groove portions 13 according to the present embodiment each include a linearly extending portion. In the present embodiment, the first groove portions 11, the second groove portions 12 and the third groove portions 13 are each formed linearly. Each of these grooves 11 to 13 can suppress the decrease in rigidity of the shoulder land portions 7 and can suppress the occurrence of uneven wear due to slipping at the time of grounding. In the present specification, the "linearly" includes a mode in which the radius of curvature of the groove center line of each of the groove portions 11 to 13 is formed by a single arc having a radius of curvature of 150 mm or more. When each of the grooves 11 to 13 is formed in an arc shape, the load acting on the first shoulder lateral grooves 10 is dispersed when grounding, and the uneven wear resistance performance is further enhanced.

A distance La in the tire axial direction between inner ends 10i in the tire axial direction of the first shoulder lateral grooves 10 and the shoulder circumferential groove 5 adjacent to the inner ends 10i is preferably of from 2% to 7% of a width Ws in the tire axial direction of the shoulder land portion 7. When the distance La exceeds 7% of the width Ws of the shoulder land portion 7, the rigidity of the shoulder land portion 7 cannot be reduced appropriately, and the impact sound may increase. When the distance La is less than 2% of the width Ws of the shoulder land portion 7, the rigidity of the shoulder land portion 7 between the first shoulder lateral grooves 10 and the shoulder circumferential groove 5 becomes excessively small and the uneven wear resistance performance may deteriorate.

The first groove portions 11 and the second groove portions 12, for example, include portions that extend parallel to each other. In the present embodiment, the first groove portions 11 and the second groove portion 12 are parallel with each other. Due to such first shoulder lateral grooves 10, the difference between the rigidity of the shoulder land portions 7 between the first groove portions 11 and the third groove portions 13 and the rigidity of the shoulder land portions 7 between the second groove portions 12 and the third groove portions 13 can be small, and the occurrence of uneven wear can be suppressed. In the present specification, "parallel with each other" means a mode where the difference of absolute values of angles |θ1 - θ2| is 10 degrees or less, where the angle θ1 is an angle of the first groove portions 11 with respect to the tire circumferential direction and the angle θ2 is an angle of the second groove portions 12 with respect to the tire circumferential direction.

The third groove portions are preferably inclined at an angle θa of from 100 to 140 degrees with respect to the first groove portions 11. When the above angle θa exceeds 140 degrees, lengths of the third groove portions 13 in the tire circumferential direction become smaller, and distances between the first groove portions 11 and the second groove portions 12 may not be increased. Thus, the dispersion of the reaction force at the time of grounding may be suppressed, and the impact sound may not be reduced. In addition, the third groove portions 13 and the first groove portions 11 may be grounded on the both edges 16A and 16B at the same time, and the impact sound may not be reduced. When the above angle θa is less than 100 degrees, the rigidity of the shoulder land portions 7 sandwiched between the first groove portions 11 and the third groove portions 13 may be reduced, and cornering power may be significantly reduced. In order to effectively exert the above-mentioned effects, it is preferable that the third groove portions 13 are inclined at an angle θb of from 100 to 140 degrees with respect to the second groove portions 12. Thus, in the first shoulder lateral grooves 10, the third groove portions 13 which have different angles from those of the first groove portions 11 and the second groove portions 12 can compresses the air step by step and can reduce the air pumping noise. Further, it is preferable that the third groove portions 13 are inclined at angles θa and θb from 100 to 140 degrees with respect to the first groove portions 11 and the second groove portions 12, respectively.

To prevent the edges 16A and 16B and the first groove portions 11 and the second groove portions 12 from grounding at the same time with each other, it is especially preferable that the first groove portions 11 and the second groove portions 12 are extend in parallel with the tire axial direction. In addition, when the first groove portions 11 and the second groove portions 12 are inclined with respect to the tire axial direction, the angles θ1 and θ2 are preferably 80 degrees or more, and more preferably 85 degrees or more. In addition, the first groove portions 11 and the second groove portions 12 having such angles θ1 and θ2 can suppress slippage and reduce deterioration of uneven wear resistance performance even if slippage occurs due to the ground contact of the third groove portions 13, which are inclined at the angle θ3 smaller than that of the first groove portions 11.

A length L1 in the tire axial direction of the first groove portions 11, for example, is preferably of from 20% to 30% of the width Ws in the tire axial direction of the shoulder land portion 7. A length L2 in the tire axial direction of the second groove portions 12, for example, is preferably of from 90% to 110% of the length L1 in the tire axial direction of the first groove portions 11. The width Ws in the tire axial direction of each of the shoulder land portions 7 is of from 20% to 30% of the tread width TW.

In order to effectively exert the above-mentioned effects, it is preferable that the angle θ3 of the third groove portions 13 with respect to the tire circumferential direction is 20 to 40 degrees. From the same viewpoint, a length L4 in the tire circumferential direction of the third groove portions 13 is preferably of from 70% to 90% of a pitch PI in the tire circumferential direction of the first shoulder lateral grooves 10.

Although not particularly limited, a groove width W1 of the first shoulder lateral grooves 10 is preferably of from 2% to 12% of the width Ws in the tire axial direction of the shoulder land portions 7. The groove width W1 of the first shoulder lateral grooves 10 is the same in the longitudinal direction in the present embodiment. Such first shoulder lateral grooves 10 can equalize the rigidity of the shoulder land portions 7 between the first shoulder lateral grooves 10 and 10 along the tire axial direction and enhance uneven wear resistance performance. The groove width W1 of the first shoulder lateral grooves 10 may gradually decrease outwardly in the tire axial direction. Such first shoulder lateral grooves 10 can suppress the air column resonance sound generated in the third groove portions 13 from being discharged from the tread edges Te to the outside of the tire 1 and enhance the noise performance. The groove depth (not illustrated) of the first shoulder lateral grooves 10 is not particularly limited, but is, for example, from 6 to 8 mm.

The shoulder land portions 7 according to the present embodiment are provided with shallow grooves 15 crossing the first shoulder lateral grooves 10. Such shallow grooves 15 further reduce the rigidity of the shoulder land portions 7 to moderately reduce the impact sound.

Each shallow groove 15, in the present embodiment, are communicated with one of the second groove portions 12, the third groove portion 13 of one of the first shoulder lateral grooves 10 that is adjacent to the second groove portion 12 in the tire circumferential direction, and the first groove portion 11 of one of the first shoulder lateral grooves 10 that is adjacent to the third groove portion 13 in the tire circumferential direction. Such shallow grooves 15 further reduce the impact sound due to grounding of the first groove portions 11, the second groove portions 12 and the third groove portions 13.

A groove depth (not illustrated) of the shallow grooves 15 is preferably 1 mm or less. A width W2 of the shallow grooves 15 is preferably 2 mm or less. As a result, the above-mentioned effects are effectively exerted. When the groove depth of the shallow grooves 15 exceeds 1 mm, or when the width W2 of the shallow grooves 15 exceeds 2 mm, the rigidity of the shoulder land portions 7 may become excessively small and the uneven wear resistance performance may deteriorate.

The shallow grooves 15 are formed in a curved shape in the present embodiment. Such shallow grooves 15 disperse the load at grounding, thus increasing uneven wear resistance performance. The shallow grooves 15 may be formed in linearly. Such shallow grooves 15 effectively shift the timing of ground contact, so that the impact sound is further reduced.

It is preferable that an angle α1 of the shallow grooves 15 is, for example, of from 35 to 55 degrees with respect to the tire circumferential direction. Such shallow grooves 15 further exert the above-mentioned effects effectively.

As shown in FIG. 1, the shoulder circumferential grooves 5 include a first the shoulder circumferential groove 5A on one side in the tire axial direction (on the left side in Figure) and a second shoulder circumferential groove 5B on the other side in the tire axial direction (on the right side in Figure). Thus, the shoulder land portions 7 according to the present embodiment include a first shoulder land portion 7A adjacent to the first shoulder circumferential groove 5A and a second shoulder land portion 7B adjacent to the second shoulder circumferential groove 5B.

The first shoulder lateral grooves 10 according to the present embodiment are provided on the first shoulder land portion 7A and the second shoulder land portion 7B. In the present embodiment, the third groove portions 13A provided on the first shoulder land portion 7A are inclined in the same direction with respect to the tire axial direction as the third groove portions 13B provided on the second shoulder land portion 7B.

In the present embodiment, the third groove portions 13A on the first shoulder land portion 7A is inclined in the same direction as the third groove portions 13B on the second shoulder land portion 7B. Thus, the tread portion 2 according to the present embodiment is formed as a non-directional pattern.

In the tread portion 2 according to the present embodiment, a crown circumferential groove 6 is provided between the tire equator C and each of the shoulder circumferential grooves 5. The crown circumferential grooves 6, in the present embodiment, include a first crown circumferential groove 6A adjacent to the first shoulder circumferential groove 5A and a second crown circumferential groove 6B adjacent to the second shoulder circumferential grooves 5B.

Thus, the land portions 4 according to the present embodiment further include middle land portions 8 and a crown land portion 9. The middle land portions 8, for example, include a first middle land portion 8A demarcated between the first shoulder circumferential groove 5A and the first crown circumferential groove 6A, and a second middle land portion 8B demarcated between the second shoulder circumferential groove 5B and the second crown circumferential groove 6B. The crown land portion 9 is demarcated between the first crown circumferential groove 6A and the second crown circumferential groove 6B.

The middle land portions 8 and the crown land portion 9, in the present embodiment, are formed into a plain rib that is not provided with any grooves nor sipes. Such middle land portions 8 and crown land portion 9 can reduce slippage during ground contact and enhance uneven wear resistance performance. The middle land portions 8 and the crown land portion 9 are not limited to such an embodiment, but for example, various lateral grooves extending in the tire axial direction and longitudinal grooves extending in the tire circumferential direction may be provided.

The circumferential grooves 3 according to the present embodiment, for example, extend linearly. Such circumferential grooves 3 maintain high rigidity of the land portions 4 adjacent to the circumferential grooves 3 and enhance uneven wear resistance performance. The circumferential groove 3 may extend in a zigzag shape or a wavy shape, for example.

A groove width Wa of the circumferential grooves 3 is not particularly limited, but for example, is preferably of from 2% to 6% of the tread width TW. A groove depth (not illustrated) of the circumferential grooves 3, for example, is preferably of from 6 to 15 mm.

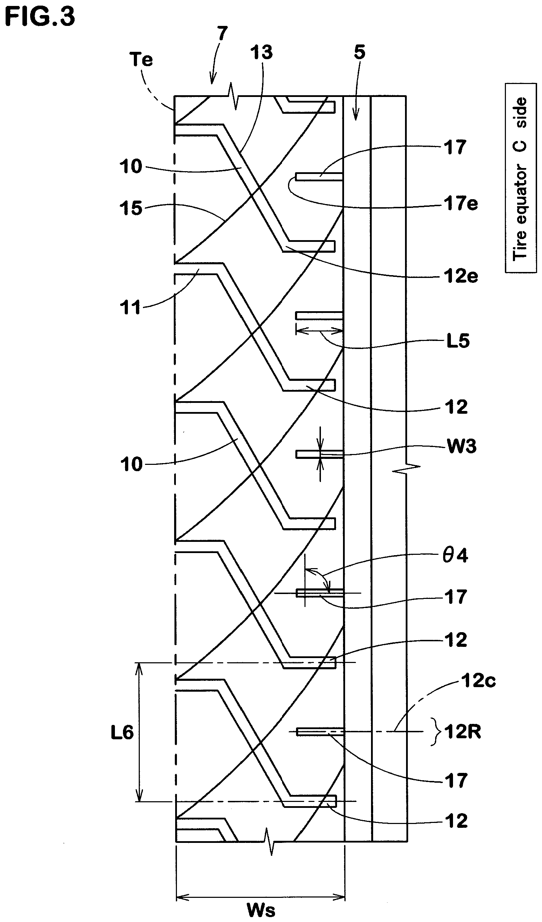

FIG. 3 is a development view of one of the shoulder land portions 7 in accordance with another embodiment. The same elements as the elements of the previous embodiment are denoted by the same reference numerals and the description thereof is omitted herein. As shown in FIG. 3, the shoulder land portions 7 according to this embodiment are provided with a plurality of second shoulder lateral grooves 17 extending outwardly in the tire axial direction from the shoulder circumferential grooves 5 and terminating within the shoulder land portions 7. Such second shoulder lateral grooves 17 moderately reduce the rigidity of the shoulder land portions 7 on the tire equator C side on which a large contact pressure acts, and reduce the impact noise at the time of contact.

In this embodiment, the first shoulder lateral grooves 10 and the second shoulder lateral grooves 17 are arranged alternately in the tire circumferential direction. This can suppress an excessive decrease in the rigidity of the shoulder land portions 7.

The second shoulder lateral grooves 17, in this embodiment, extend linearly. Such second shoulder lateral grooves 17 can suppress an excessive decrease in the rigidity of the shoulder land portions 7, and suppress the occurrence of uneven wear due to slipping at the time of grounding. When the second shoulder lateral grooves 17 are formed in an arc shape, the load acting on the second shoulder lateral grooves 17 may be dispersed when grounding, and the uneven wear resistance performance is further enhanced.

The second shoulder lateral grooves 17, for example, are parallel with the second groove portions 12. Such second shoulder lateral grooves 17 can equalize the rigidity in the tire circumferential direction of the shoulder land portions 7 between the second groove portions 12 and the second shoulder lateral grooves 17 in the tire axial direction, and keep uneven wear resistance performance high. Note that the above "parallel" is understood to have the same meaning as the parallel between the first groove portions 11 and the second groove portions 12. In order to effectively exert such an effect, it is preferable that an angle θ4 of the second shoulder lateral grooves 17 with respect to the tire circumferential direction is 80 degrees or more, and more preferably 85 degrees or more.

Outer ends 17e in the tire axial direction of the second shoulder lateral grooves 17, for example, are located on the tire equator C side than the outer ends 12e in the tire axial direction of the second groove portions 12. Such second shoulder lateral grooves 17 can suppress an excessive decrease in rigidity of the shoulder land portions 7 on the tire equator C side. A length L5 in the tire axial direction of the second shoulder lateral grooves 17 is preferably of from 20% to 40% of the width Ws in the tire axial direction of the shoulder land portions 7.

In this embodiment, the second shoulder lateral grooves 17 terminate within the shoulder land portions 7 without being in communication with the shallow grooves 15. As a result, the above-mentioned effects are more effectively exerted. In an embodiment in which the second shoulder lateral grooves 17 are connected to the shallow grooves 15, the reaction force of the second shoulder lateral grooves 17 at the time of grounding is dispersed and the impact sound is reduced.

The second shoulder lateral grooves 17, for example, are arranged in respective intermediate regions 12R between the second groove portions 12 and 12 adjacent in the tire circumferential direction. As a result, the excessive decrease in rigidity of the shoulder land portions 7 can be suppressed, and uneven wear resistance performance is maintained high. The "intermediate region 12R" is both regions in the tire circumferential direction within 10% of a tire circumferential length L6 between the adjacent second groove portions 12 and 12 from the center position 12c in the tire circumferential direction between the adjacent second groove portions 12. In this embodiment, the entire lengths of the second shoulder lateral grooves 17 are located within the intermediate regions 12R.

A groove width W3 of the second shoulder lateral grooves 17 is smaller than the groove width W1 of the first shoulder lateral grooves 10. This keeps uneven wear resistance performance high. The groove width W3 of the second shoulder lateral grooves 17 is preferably of from 40% to 60% of the groove width W1 of the first shoulder lateral grooves 10.

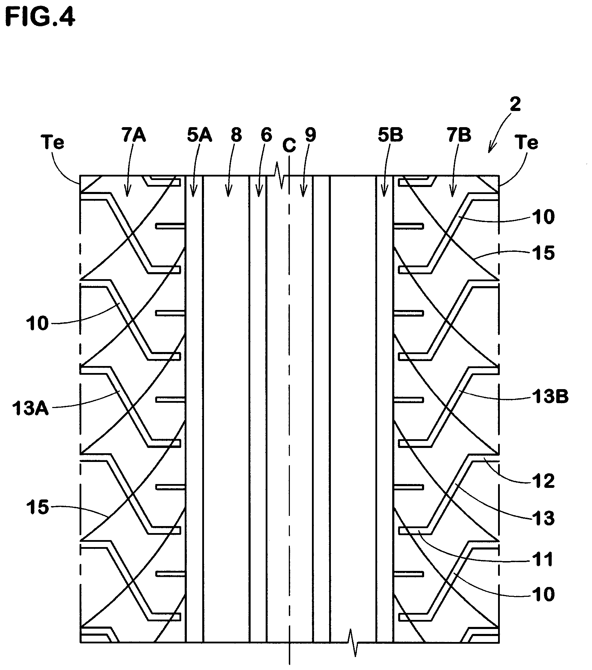

FIG. 4 is a development view of the tread portion 2 in accordance with another embodiment. In this embodiment, the same elements as the elements of the previous embodiment are denoted by the same reference numerals and the description thereof is omitted herein. As shown in FIG. 4, in the tread portion 2 according to this embodiment, the third groove portions 13A provided on the first shoulder land portion 7A are inclined in the different direction to the third groove portions 13B provided on the second shoulder land portion 7B with respect to the tire circumferential direction. Such a tread portion 2 has a so-called directional pattern. In this embodiment, the pattern of the first shoulder land portion 7A and the pattern of the second shoulder land portion 7B are formed in a line-symmetrical shape with respect to the tire equator C.

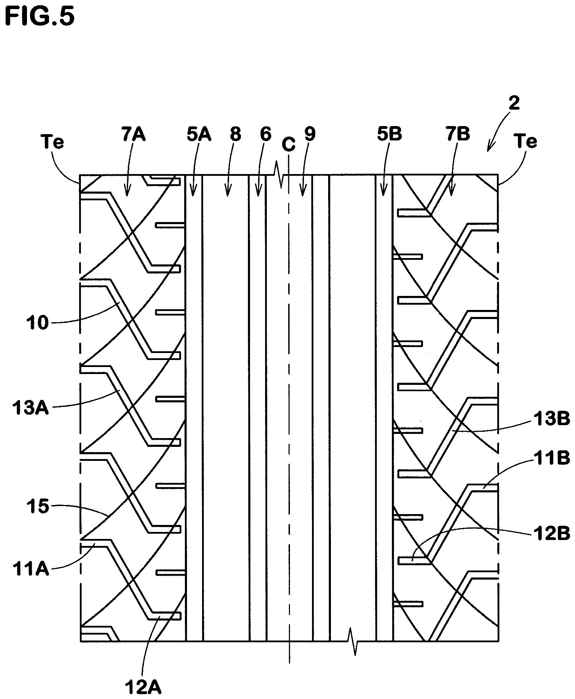

FIG. 5 is a development view of the tread portion 2 in accordance with yet another embodiment. In this embodiment, the same elements as the elements of the previous embodiment are denoted by the same reference numerals and the description thereof is omitted herein. As shown in FIG. 5, in the tread portion 2 according to the present embodiment, the first groove portions 11A and the second groove portions 12A provided on the first shoulder land portion 7A are staggered in the tire circumferential direction with respect to the first groove portions 11B and the second groove portions 12B provided on the second shoulder land portion 7B. In such a tread portion 2, the impact noise can be further reduced because each of the first groove portions 11A and 11B and each of the second groove portions 12A and 12B are located at different positions in the tire circumferential direction. In this embodiment, by shifting the first shoulder land portion 7A in the tire circumferential direction, the pattern of the first shoulder land portion 7A and the pattern of the second shoulder land portion 7B may be formed in a line symmetric shape with respect to the tire equator C. In addition, in this tread portion 2, the third groove portions 13A on the first shoulder land portion 7A and the third groove portions 13B on the second shoulder land portion 7B are inclined in different direction with respect to the tire axial direction.

Although the particularly preferable embodiments of the present invention have been described in detail above, the present invention is not limited to the embodiments shown in the drawings.

### Examples

Pneumatic tires (size: 215/60R16) with the basic pattern of FIG. 1 and based on the specifications in Table 1 were manufactured and tested for their performance. The main common specifications are as follows.

### <Each circumferential groove>

Groove depth: 8 mm

### <First shoulder lateral grooves>

Angle θ3 of third groove portions: 30 degrees (only comparative example 1: 90 degrees) θa = θb
L1 is the same in all comparative examples and all examples.

### <Second shoulder lateral grooves and shallow grooves>

Groove depth of second shoulder lateral grooves: 6 mm
Groove depth of shallow grooves: 1 mm

The test methods are as follows

### <Uneven wear resistance performance>

A test driver drove a 2000 cc rear-wheel drive vehicle equipped with test tires on all wheels for 10,000 km on a dry paved road. After that, the state of uneven wear that occurred in the shoulder land portions was evaluated by the sensory of the test driver. The results are displayed with a score of 100 for Comparative Example 1. The larger the number, the better.

### <Noise performance >

The above test vehicle was made to run on a dry paved road surface at a speed of 60 km/h, and the noise heard in the passenger compartment was evaluated by the sensuality of the test driver. The results are displayed with a score of 100 for Comparative Example 1. The larger the number, the better.

The test results are shown in Table 1.

**[Table 1]**

| | Comparative example 1 | Comparative example 2 | Example 1 | Example 2 | Example 3 | Example 4 | Example 5 | Example 6 | Example 7 |
|---|---|---|---|---|---|---|---|---|---|
| Figure showing tread portion | FIG. 1 | FIG. 1 | FIG. 1 | FIG. 1 | FIG. 1 | FIG. 1 | FIG. 1 | FIG. 1 | FIG. 4 |
| La/Ws (%) | 5.5 | 0 | 5.5 | 2 | 5.5 | 5.5 | 5.5 | 5.5 | 5.5 |
| θa (deg.) | 180 | 120 | 120 | 120 | 100 | 140 | 150 | 120 | 120 |
| L4/P1 (%) | 0 | 82 | 82 | 82 | 82 | 82 | 82 | 82 | 82 |
| Presence of second shoulder lateral grooves | none | none | none | none | none | none | none | presence (FIG. 3) | none |
| Uneven wear resistance performance [score: larger is better] | 100 | 95 | 110 | 105 | 107 | 112 | 112 | 108 | 110 |
| Noise performance [score: larger is better] | 100 | 105 | 115 | 115 | 110 | 115 | 108 | 117 | 115 |

It was confirmed that the tires of the examples had improved noise performance and uneven wear resistance performance as compared with the tires of the comparative examples.

### Reference Signs List

- 1: tire
- 2: tread portion
- 7: shoulder land portions
- 10: first shoulder lateral grooves
- 11: first groove portions
- 12: second groove portions
- 13: third groove portions
- Te: tread edges

## Claims

1. A tire comprising a tread portion with a ground contact surface formed between tread edges, wherein
the tread portion is provided with a plurality of circumferential grooves extending continuously in a tire circumferential direction and land portions demarcated by the circumferential grooves,
the circumferential grooves comprise shoulder circumferential grooves arranged nearest to the respective tread edges,
the land portions comprise shoulder land portions demarcated between the shoulder circumferential grooves and the tread edges,
the shoulder land portions are provided with a plurality of first shoulder lateral grooves extending inwardly in a tire axial direction from the tread edges and terminating within the shoulder land portions, and
the first shoulder lateral grooves comprise
first groove portions extending in the tire axial direction from the tread edges,
second groove portions extending in the tire axial direction at locations that are inward in the tire axial direction than the first groove portions and are different from the first groove portions with respect to the tire circumferential direction, and
third groove portions connecting the first groove portions and the second groove portions.

2. The tire as set forth in claim 1, wherein
the first groove portions, the second groove portions and the third groove portions are formed linearly.

3. The tire as set forth in claim 2, wherein
the first groove portions and the second groove portions are parallel with each other, and
the third groove portions are inclined at an angle of from 100 to 140 degrees with respect to the first groove portions and the second groove portions.

4. The tire as set forth in any one of claims 1 to 3, wherein
the shoulder land portions are provided with a plurality of second shoulder lateral grooves extending outwardly in the tire axial direction from the shoulder circumferential grooves and terminating within the shoulder land portions, and
the first shoulder lateral grooves and the second shoulder lateral grooves are arranged alternately in the tire circumferential direction.

5. The tire as set forth in any one of claims 1 to 4, wherein
the shoulder land portions are provided with shallow grooves crossing the first shoulder lateral grooves.

6. The tire as set forth in claim 5, wherein
the shallow grooves have a groove depth not more than 1 mm.

7. The tire as set forth in claim 5 or 6, wherein
the shallow grooves are formed in a curved shape.

8. The tire as set forth in any one of claims 1 to 7, wherein
the shoulder land portions comprise a first shoulder land portion provided on one side in the tire axial direction and a second shoulder land portion provided on the other side in the tire axial direction, and
the third groove portions provided on the second shoulder land portion are inclined in a same direction as the third groove portions provided on the first shoulder land portion with respect to the tire circumferential direction.

9. The tire as set forth in any one of claims 1 to 7, wherein
the shoulder land portions comprise a first shoulder land portion provided on one side in the tire axial direction and a second shoulder land portion provided on the other side in the tire axial direction, and
the third groove portions provided on the second shoulder land portion are inclined in a different direction to the third groove portions provided on the first shoulder land portion with respect to the tire circumferential direction.

10. The tire as set forth in any one of claims 1 to 9, wherein
the third groove portions are inclined at an angle of from 20 to 40 degrees with respect to the tire circumferential direction, and
the third groove portions have a length in the tire circumferential direction of from 70% to 90% of a pitch in the tire circumferential direction of the first shoulder lateral grooves.

11. The tire as set forth in any one of claims 1 to 10, wherein
a length in the tire axial direction of the first groove portions is of from 20% to 30% of a width in the tire axial direction of the shoulder land portions, and
a length in the tire axial direction of the second groove portions is of from 90% to 110% of the length in the tire axial direction of the first groove portions.

12. The tire as set forth in any one of claims 1 to 11, wherein
a distance in the tire axial direction between inner ends in the tire axial direction of the first shoulder lateral grooves and the shoulder circumferential groove adjacent the inner ends is of from 2% to 7% of a width in the tire axial direction of the concerned shoulder land portion.

13. The tire as set forth in any one of claims 1 to 12, wherein
the first groove portions and the second groove portions have an angle not less than 80 degrees with respect to the tire circumferential direction.

14. The tire as set forth in any one of claims 1 to 13, wherein
the shoulder land portions comprise a first shoulder land portion provided on one side in the tire axial direction and a second shoulder land portion provided on the other side in the tire axial direction, and
the first groove portions and the second groove portions provided on the first shoulder land portion are staggered in the tire circumferential direction with respect to the first groove portions and the second groove portion provided on the second shoulder land portion.

15. The tire as set forth in any one of claims 1 to 14, wherein
a groove width of the first shoulder lateral grooves is of from 2% to 12% of a width in the tire axial direction of the shoulder land portions, and is constant in a length direction thereof.
